# EUROPEAN PATENT APPLICATION

(11) **EP 2 447 572 A1**
(43) Date of publication of application: **02.05.2012**
(21) Application number: 10792050.6
(22) Date of filing: 21.06.2010
(51) Int. Cl.: F16H 25/24, B66F 9/075, F16H 25/22

(54) **LINEAR ACTUATOR AND FORKLIFT**

(30) Priority: 22.06.2009 JP 2009147770
(71) Applicant: Hitachi Construction Machinery Co., Ltd, Tokyo 112-8563 (JP)
(72) Inventor: HAYASE Isao, Chiyoda-ku, Tokyo 100-8220 (JP); HIRAKU Kenji, Chiyoda-ku, Tokyo 100-8220 (JP); YAMADA Hiroyuki, Chiyoda-ku, Tokyo 100-8220 (JP); OCHIAI Masami, Tsuchiura-shi Ibaraki 300-0013 (JP); YANAGI Yuichi, Nishi-ku, Osaka 550-0003 (JP)
(74) Representative: Beetz & Partner
(86) International application number: PCT/JP2010/060447
(87) International publication number: WO 2010/150732

(57) **Abstract**

This invention includes a screw shaft 1, a screw thread 30 formed spirally on an outer periphery of the screw shaft, main rollers 4 with rolling surfaces 4c each of which comes into contact with a flank surface 1a of the thread, the main rollers each rolling along the flank surface by rotating about a rotational axis D, roller support members 6 each supporting one main roller so as to enable the main roller to rotate about the rotational axis, and a roller cage 2 supporting the roller support member so as to enable the support member to oscillate with respect to a force transmitted from the flank surface via the rolling surface to the main roller, the roller cage being constructed to turn about the screw shaft in relative form with respect to the screw shaft when the main roller rolls.

Thus, the roller and the screw shaft reliably come into linear contact with each other, even if a backlash due to dimensional errors between parts exists between the parts.

## Description

### Technical Field

The present invention relates to a linear actuator that converts rotary motion of a rotary driving source into rectilinear motion, and to a forklift truck equipped with the linear actuator.

### Background Art

In recent years, a trend towards using electrically driven actuators as the actuators for various machines and devices, in place of conventional hydraulic actuators, is increasing as integral part of the countermeasures against environmental pollution and global warming. This tendency aims at achieving several advantageous effects obtainable from using electrically driven actuators. For example, not using the hydraulic oil required for the operation of hydraulic machines or devices serves as an environmental preventive in itself, and at the same time, the improvement of efficiency by electrical driving is useful for reducing motive power consumption. In addition, it is possible to further reduce motive power consumption by utilizing power regeneration, to reduce the local environmental load at the operating site of the actuator by converting its source of energy from the fuel in an internal-combustion engine into electric power, and to use energy more effectively in a wider area by using midnight electric power via batteries. Such a trend is already extending to the application field of the linear actuators which generate large thrust, as with the hydraulic cylinders most commonly used on construction machines. For these reasons, needs for electrically driven linear actuators durable for large-thrust generation are also increasing.

Among the rotary-to-linear conversion mechanisms used in electrically driven linear actuators are ball screws that use a small ball as the rolling body disposed in a clearance between a screw shaft and a nut member. This conventional technique causes point contact between the screw shaft, the nut member, and the small ball, thus resulting in flaking due to a significant Hertzian stress, and tending not to guarantee enough durability for use in large-thrust long-life applications.

The techniques intended to solve problems of this kind include those which adopt, instead of the small ball in the ball screw, a roller that rotates as a rolling body about a rotating shaft disposed substantially parallel to a central axis of a screw shaft. These techniques are described in, for example, Japanese Patent Application Publication No. JP,A 1986-286663, Japanese Utility Model Registration Publication No. JP,Y 2594535, and others. Other similar techniques employ a roller that rotates as a rolling body about a rotating shaft disposed on a plane substantially orthogonal to a central axis of a screw shaft (see Japanese Patent Application Publication Nos. JP,B 1994-17717, JP,U 1987-91050, and others). These conventional techniques each using the roller as a rolling body aim at reducing the above-mentioned Hertzian stress for improved durability against flaking, by generating linear contact or a contact state close thereto between the roller and the screw shaft.

### Related Art Literature

### (Patent Documents)

Patent Document 1: JP,A 1986-286663
Patent Document 2: JP,Y 2594535
Patent Document 3: JP,B 1994-17717
Patent Document 4: JP,U 1987-91050

### Summary of the Invention

### (Problems to be Solved by the Invention)

To bring the screw shaft and the roller into linear contact as discussed above, predetermined contact sections between both need to be brought into parallel contact exactly as designed. When an actual linear actuator mechanism is considered, however, dimensional errors between parts cause a backlash between the parts in relative motion. This means that one must be aware beforehand of the fact that under an assembled state or a loaded state, variations in backlash occur since as-designed ideal positional relationships and/or relative positions (inclinations) between the parts are usually unobtainable.

The above-discussed backlash due to dimensional errors, therefore, prevents the contact sections between the screw shaft and the roller from becoming parallel exactly as designed. As a result, the screw shaft and the roller cannot come into linear contact. Instead, both come into one-side contact (point contact), which results in significant Hertzian stressing due to edge loading. This means that changing the contact state from point contact to linear contact will require adding a new quality-control item that is a control of directionality of the contact sections and thus reduce tolerances for the dimensional errors, assembly errors, and the like. That is to say, it is realistically difficult to stably bring the screw shaft and the roller into linear contact and hence to reduce Hertzian stresses for improved durability against flaking.

An object of the present invention is to provide a linear actuator capable of bringing reliably a roller and a screw shaft into linear contact, even in presence of a backlash between parts due to dimensional errors between the parts.

### Means for Solving the problems

In order to attain the above object, a linear actuator according to an aspect of the present invention includes: a screw shaft, a screw thread formed spirally on an outer circumference of the screw shaft; main rollers with rolling surfaces each of which comes into contact with a flank surface of the screw thread, the main rollers each rolling along the flank surface via the rolling surface by rotating about a rotational axis; roller support members each supporting one of the main rollers so as to enable rotation of the roller about the rotational axis; and a roller cage supporting each roller support member so as to enable oscillation of the support member with respect to a force transmitted from the flank surface via the rolling surface to the main roller, the roller cage being constructed to turn about the screw shaft in relative form with respect thereto when the main roller rolls.

### Effects of the Invention

The present invention reliably brings the roller and the screw shaft into linear contact, even in the presence of the backlash between parts due to dimensional errors between the parts.

### Brief Description of the Drawings

Fig. 1 is a side view of a linear actuator according to a first embodiment of the present invention;
Fig. 2 is a front view of the linear actuator as viewed in the direction II in Fig. 1;
Fig. 3 is a top view of the linear actuator as viewed in the direction III in Fig. 1;
Fig. 4 is a bottom view of the linear actuator as viewed in the direction IV in Fig. 1;
Fig. 5 is a cross-sectional view taken along line V-V in Figs. 3 and 4;
Fig. 6 is a top view of a roller support member and periphery as extracted from Fig. 3;
Fig. 7 is a cross-sectional view taken along line VII-VII in Fig. 6;
Fig. 8 is an external view of the roller support member as viewed in the same direction as in Fig. 7;
Fig. 9 is a cross-sectional view taken along line IX-IX in Fig. 4;
Fig. 10 is a diagram that illustrates principles of operation of a self-aligning mechanism of the linear actuator according to the first embodiment of the present invention;
Fig. 11 is a side view of a forklift truck equipped with the linear actuator according to the first embodiment of the present invention; and
Fig. 12 is an enlarged view of a mast and periphery in the forklift truck of Fig. 11.

### Modes for Carrying Out the Invention

Hereunder, embodiments of the present invention will be described using the accompanying drawings.

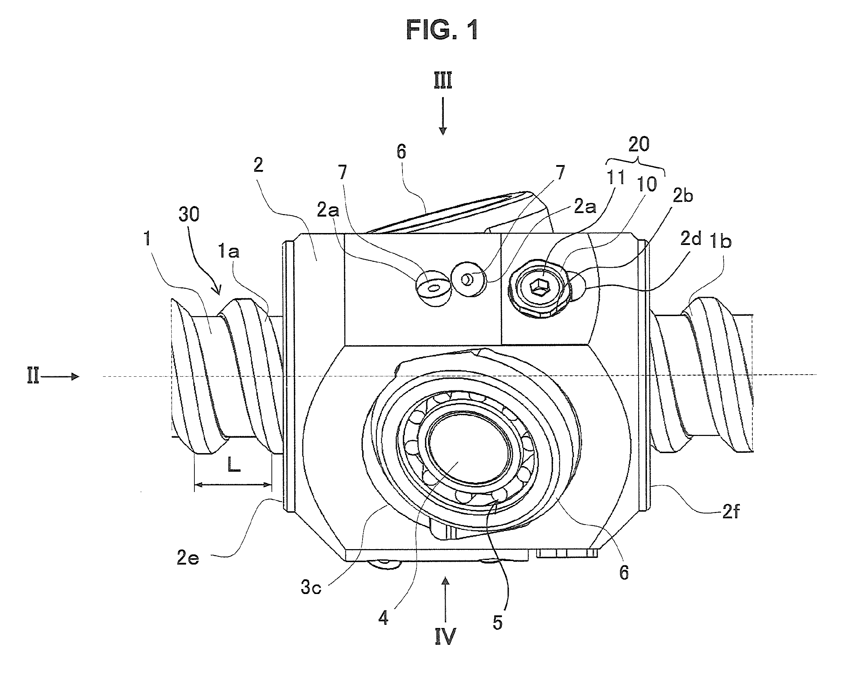

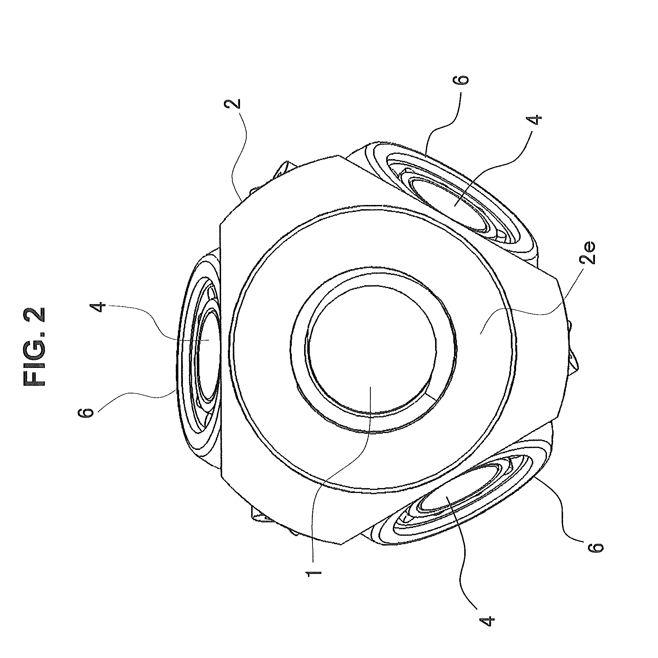

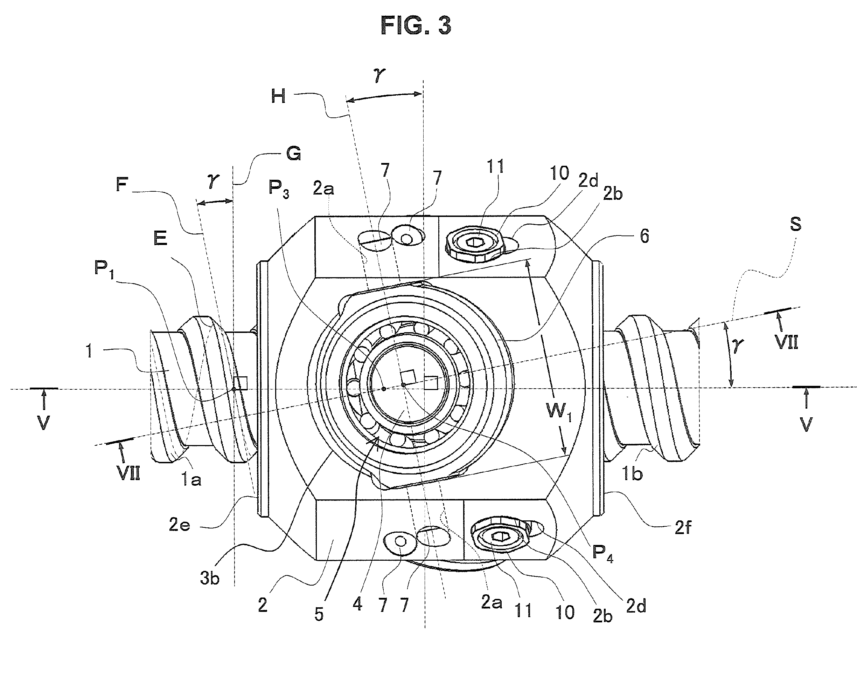

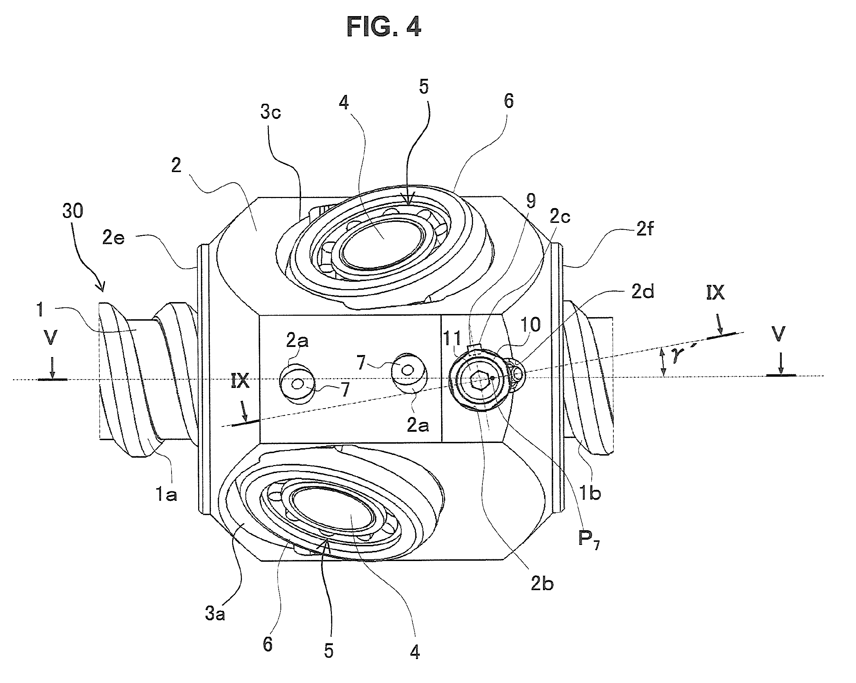

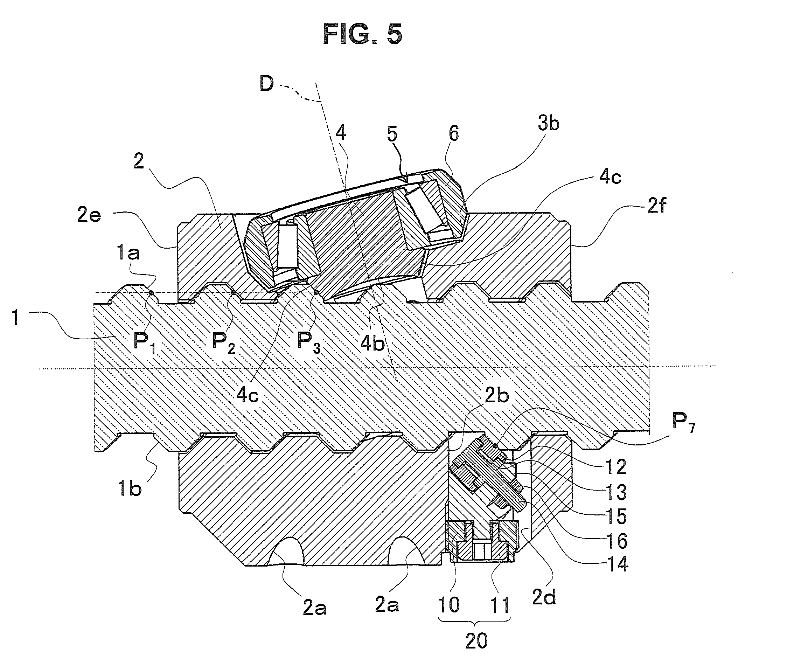

Fig. 1 is a side view of a linear actuator according to a first embodiment of the present invention; Fig. 2 a front view thereof, as viewed in the direction II in Fig. 1; Fig. 3 a top view thereof, as viewed in the direction III in Fig. 1; Fig. 4 a bottom view thereof, as viewed in the direction IV in Fig. 1; and Fig. 5 a cross-sectional view taken along line V-V in Figs. 3 and 4. A plane passing through a central axis of a screw shaft 1 in Figs. 3 and 4 perpendicularly to the sheets thereof is set as a cutting plane in the cross-sectional view of Fig. 5.

The linear actuator shown in Figs. 1 to 5 includes primarily a screw shaft 1, a roller cage 2, roller support members 6, main rollers 4, and auxiliary rollers 12 (see Fig. 5).

Spirally formed screw thread 30 is provided on an outer circumference of the screw shaft 1, and the thread has a bottom larger than a top thereof. The thread 30 in the present embodiment has a trapezoidal cross section, and at a radially outward face thereof with respect to the screw shaft 1, the thread is substantially parallel to the central axis of the screw shaft 1. The thread 30 includes inclined flank surfaces 1a and 1b each extending from each ends of the substantially parallel face, towards the screw shaft 1. In other words, the flank surfaces 1a, 1b in the present embodiment are inclined with respect to the screw shaft 1 so that the bottom of the thread 30 is larger than the top thereof. The thread 30 formed in this way forms thread groove on the outer circumference of the screw shaft 1. The screw shaft 1 is male-threaded. Where appropriate, of the flank surfaces 1a, 1b, a flank surface on the right side of thread 30 relative to the top thereof in Fig. 1 will be hereinafter referred to as the right flank surface 1a, and a flank surface on the left side, as the left flank surface 1b.

The roller cage 2 that supports the main rollers 4 via the roller support members 6 is constructed so that when the main roller 4 rolls along the surface of the thread 30, the cage will rotate about the screw shaft 1 in relative form with respect thereto. The roller cage 2 includes main roller insertion holes 3 (3a, 3b, 3c) into each of which one of the roller support members 6 and one of the main rollers 4 are inserted, oscillating pin insertion holes 2a into each of which an oscillating pin 7 is inserted, auxiliary roller insertion holes 2b into each of which an auxiliary roller 12 and auxiliary roller position-adjusting means 20 are inserted, keyways 2c (see Fig. 4) into each of which a sliding key 9 is inserted, a left end face 2e of the roller cage 2 shown in Fig. 1, and a right end face 2e of the roller cage 2 shown in Fig. 1. The roller cage 2 and the screw shaft 1 are in contact with each other, only via a rolling surface 4c (see Fig. 5) of each main roller 4, and are in a non-contact state at all other sections. When the main roller 4 rolls, the roller cage 2 will rotate about the screw shaft 1 in relative form with respect thereto and this rotation will generate relative rectilinear motion between the screw shaft 1 and the roller cage 2.

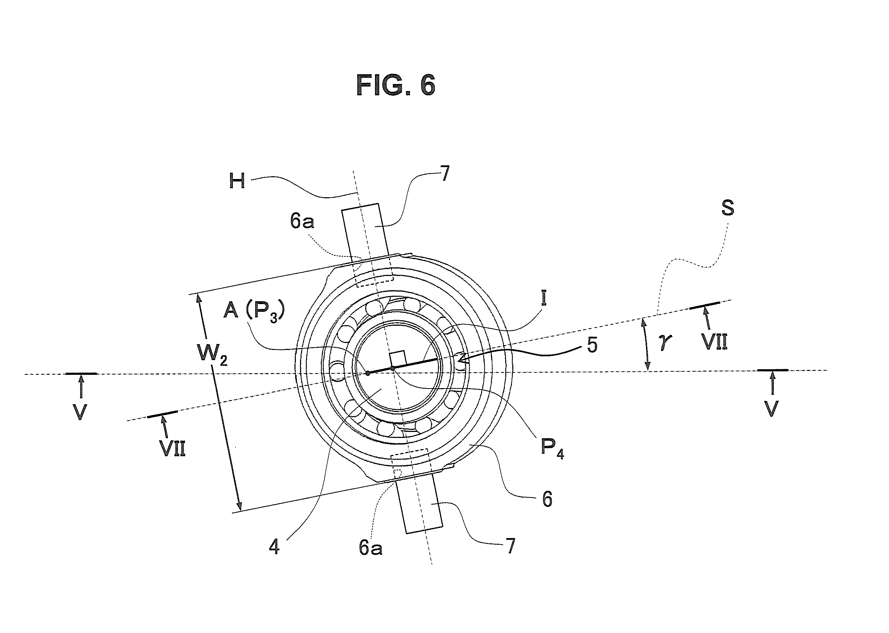

Each main roller insertion hole 3 is appropriately formed to fit a shape of the roller support member 6 and that of the main roller 4, as shown in Fig. 5. The roller support member 6 inserted within the main roller insertion hole 3 is supported by two oscillating pins 7 so as to be able to oscillate, the oscillating pins 7 each being bridged between one of the oscillating pin insertion holes 2a and one of oscillating pin insertion holes 6a (see Fig. 6).

In the roller cage 2 of the present embodiment, three main roller insertion holes, 3a, 3b, 3c are provided and three roller support members 6 are accommodated. The three main roller insertion holes are numbered 3a, 3b, and 3c, in that order from depths of the sheet of Fig. 1 towards the front of the sheet (at least the insertion hole 3a at the deepest position in Fig. 1 is totally not shown). The main roller insertion hole 3b is disposed at a position shifted from a position of the main roller insertion hole 3a through 1/3 of a lead L of the screw shaft 1 in a rightward direction of Fig. 1 (axial direction of the screw shaft 1) and rotated from the position of the main roller insertion hole 3a through 120 degrees (2n/3) about the central axis of the screw shaft 1. The main roller insertion hole 3c is disposed at a position shifted from the position of the main roller insertion hole 3b through 1/3 of the lead L in the rightward direction of Fig. 1 and rotated from the position of the main roller insertion hole 3b through 120 degrees about the central axis of the screw shaft 1.

Detailed configurations of each roller support member 6 and the main roller 4 are described below using Figs. 6, 7, and 8.

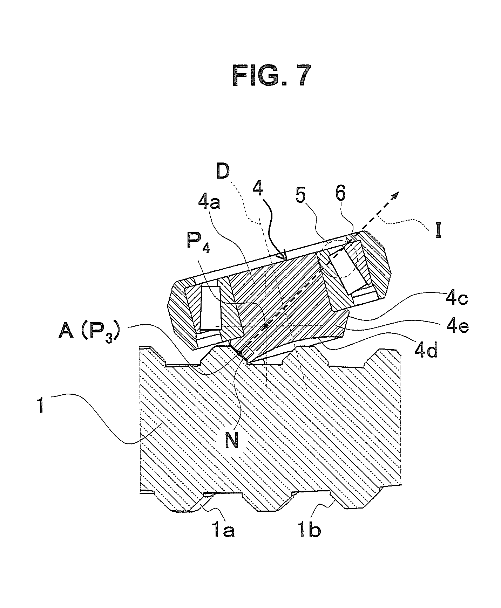

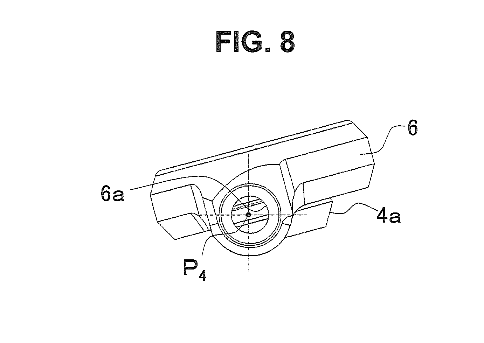

Fig. 6 is a top view of a roller support member and periphery thereof extracted from Fig. 3, Fig. 7 is a cross-sectional view taken along line VII-VII in Fig. 6, and Fig. 8 is an external view of the roller support member as viewed in the same direction as in Fig. 7. The same elements in the foregoing figures are each assigned the same reference number or symbol, and description of these elements is omitted. The same also applies to the figures that follow.

The roller support member 6 shown in Figs. 6 to 8 includes a tapered roller bearing 5, a main roller 4 supported via the roller bearing 5 so as to be rotatable about a rotational axis D (see Fig. 7), and two oscillating pin insertion holes 6a into each of which oscillating pin 7 is inserted.

As shown in Fig. 7, the main roller 4 includes the rotational axis D positioned on the cross section VII-VII, a rolling portion 4e that rolls along the right flank surface 1a, a rotating shaft 4a that protrudes from the rolling portion 4e and includes the rotational axis D centrally inside, and an inner end face 4d formed on a distal end of the rolling portion 4e and close to the screw shaft 1. The main roller 4 rolls along the right flank surface 1a by rotating about the rotational axis D.

A rolling surface 4c that comes into contact with the right flank surface 1a is provided in a circumferential direction of the rolling portion 4e, and the rolling portion 4e rolls along the right flank surface 1a via the rolling surface 4c. The rolling surface 4c is formed to be able to come into linear contact with the right flank surface 1a. Bringing the rolling surface 4c and the right flank surface 1a into linear contact, therefore, reduces a Hertzian stress and thus improves durability against flaking. The contact section between the rolling surface 4c and the right flank surface 1a is hereinafter termed the "linear contact zone (or simply contact zone) N" (see Fig. 7).

In the present embodiment, the contact zone N is approximated assuming that it is positioned on the cross section VII-VII. That is to say, the following description assumes that the right flank surface 1a with which the rolling surface 4c is in contact in Fig. 7 has a profile equivalent to the contact zone N. Strictly, only point P₃ in the contact zone N is positioned on cross section VII-VII. More specifically, points closer to the central axis of the screw shaft 1 than point P₃ in the contact zone N are more deviated to the front of the sheet, and points more distant from the central axis of the screw shaft 1 than point P₃ are more deviated to the depths of the sheet. These are due to the fact described below. Assume a spiral region positioned on a cylindrical surface passing through a given reference point on the right flank surface 1a and sharing a central axis with the screw shaft 1, the spiral region in this case passing through the reference point and having the same lead L (see Fig. 1) as that of the screw shaft 1. Since lead angles of spirals obtained by changing the reference point depend upon a position of the reference point, the lead angles do not become constant, and only spiral region E (see Fig. 3) passing through P₃ and having a lead angle γ equal to an intersection angle γ between cross section VII-VII and the central axis of the screw shaft 1 can come into contact with the rolling surface 4c at P₃. As described above, therefore, contact points between the rolling surface 4c and other spirals passing through a point other than P₃ deviate longitudinally with respect to the sheet of Fig. 7 according to a particular difference between the lead angle γ of each spiral and the intersection angle γ. In other words, in the present embodiment, the deviations from the sheet are regarded as very small, and the contact zone N is correspondingly approximated.

In a case that, as in the present embodiment, the right flank surface 1a of the thread 30 is inclined with respect to the central axis of the screw shaft 1, each main roller 4 is preferably formed so that in a definite range in a direction of the rotational axis D of the main roller, sections of the rolling portion 4e gradually decrease in diameter as the sections are closer to the screw shaft 1 to fit a particular shape of the right flank surface 1a. Forming the main roller 4 in this way enables the main roller 4 and screw shaft 1 to be brought into mutual contact at sections that are distant from and at sections that are close to respective central axes, in addition, enables suppression of slipping to a very small level at all contact points of the both.

In addition, the rotational axis D in the present embodiment is fixed with respect to the roller cage 4 so as to retain a posture in which a line imaginarily extending the rotational axis D intersects the screw shaft 1. In other words, the rotational axis D of the main roller 4 can be described as being positioned on a plane that intersects the central axis of the screw shaft 1 (i.e., in the present embodiment, a plane on the cross section VII-VII, the plane being described later herein) at an angle nearly equal to the lead angle γ (see Fig. 3) of the thread 30. The reason that the angle made by intersecting the plane and the central axis of the screw shaft 1 is "nearly equal to the lead angle γ" is as follows. The lead angle γ can be calculated from an intersecting line of the right flank surface 1a and a predetermined cylindrical surface constantly distanced from the central axis of the screw shaft 1. However, since the right flank surface 1a exists over a predetermined range (in a height range of the thread 30) from the central axis of the screw shaft 1 in a radial direction thereof, the lead angle γ also takes a value within a predetermined range, depending upon which section on the right flank surface 1a is selected. This makes it difficult to strictly associate the angle of the plane including the rotational axis D with the lead angle γ. The rotational axis D of any other main roller 4, as with that of the main roller 4 described above, lies in a plane intersecting the central axis of the screw shaft 1 at the angle of γ.

Forming the rolling surface 4c to ensure its contact with the right flank surface 1a while retaining the rotational axis D in the above posture, therefore, enables the rolling surface 4c and the right flank surface 1a to be brought into contact with each other at sections close to respective central axes. Such forming also enables sections distant from the respective central axes to be brought into mutual contact. Thus, local slipping between the main roller 4 and the thread 30 is suppressed, which in turn leads to highly efficient operation of apparatuses.

Furthermore, while retaining the above posture, the rotational axis D in the present embodiment is maintained in a posture inclined towards the thread 30 with which the rolling surface 4c is in contact. That is to say, as shown in Fig. 7, the rotational axis D is inclined towards the contact section between the rolling surface 4c and the right flank surface 1a, on the cross section V-V. Inclining the rotational axis D towards the right flank surface 1a in this way enables the inner end face 4d of the main roller 4 to be disposed externally to a thread 30 one pitch spaced from a thread 30 with which the rolling surface 4c is in contact (i.e., a thread 30 located on the right side of a thread 30 with which the rolling surface 4c is in contact in Fig. 5). Compared with a case in which the rotational axis D is not inclined, therefore, such inclining thereof enables the rolling portion 4e of the main roller 4 to be increased in diameter (more specifically, diameter of the inner end face 4d). This in turn, for example, enables the diameter of the inner end face 4d to be made greater than a pitch of the thread 30 (in the present embodiment, also equivalent to the lead L), and hence the inner end face 4d to be opposed to a thread 30 next to a thread 30 with which the rolling surface 4c is in contact. Accordingly, maintaining the rotational axis D in a posture inclined towards the thread 30 as described above increases the rolling portion 4e in diameter. Thus, a Hertzian stress upon the rolling surface 4c and the right flank surface 1a, therefore, is reduced significantly and the actuator is extended in anti-flaking life.

To increase the diameter of the rolling portion 4e to such a level that the inner end face 4d faces the thread 30 as described above, the inner end face 4d is preferably formed with a gently curved recess, as in the present embodiment. This is because the recess formed on the inner end face 4d avoids contact of this end face with the thread 30. In addition, if the inner end face 4d is formed with such a recess, even when an angle at which the rotational axis D of the main roller 4 is inclined towards the thread 30 is small, interference between the end face 4d and the thread 30 at next pitch can be avoided. Inclining the rotational axis D at a small angle in this form enables an outside diameter of the roller cage 3 to be made small.

The two oscillating pins 7 inserted in the oscillating pin insertion holes 6a in Fig. 6 are coaxially arranged in a direction of an H-axis.

During definition of an oscillation axis H of the oscillating pins 7, any single point in the contact zone N is taken as typical point A (for the reasons described later herein, point P₃ positioned nearly centrally in the contact zone N is taken as typical point A in the present embodiment). A spiral region positioned on a cylindrical surface which passes through typical point A (P₃) and shares the same central axis with the screw shaft 1, this spiral region passing through typical point A and having the same lead L as that of the screw shaft 1, is taken as typical spiral region E (see Fig. 3). Additionally, a plane nearly orthogonal to typical spiral region E, at typical point A, is taken as typical plane S (typical plane S in the present embodiment is cross section VII-VII). The wording of "nearly" in "nearly orthogonal" here is to be construed as meaning not only a complete orthogonal state, but also a substantial state encompassing an error, a tolerance, and the like. The same also applies to the wording of "substantially" or "nearly" in the description that follows.

At this time, the oscillation axis H intersects with typical plane S, and the intersection between the oscillation axis H and typical plane S is positioned on or in neighborhood of line I passing through typical point A on typical plane S. The oscillation axis H is also fixed to intersect a face orthogonal to the central axis of the screw shaft 1, at the angle of γ, as shown in Fig. 3. Since the oscillation axis H is set in this form, the roller support member 6 can be oscillated about the oscillation axis H, with respect to a force F transmitted from the right flank surface 1a via the rolling surface 4c to the main roller 4. This means that when the force F transmitted to the main roller 4 is exerted in deviated form upon one end side of the contact zone N with typical point A as a reference, the main roller 4 can be oscillated in a direction that the other end side of the contact zone N is brought closer to the right flank surface 1a with typical point A as a reference.

In order for the main roller 4 to oscillate more efficiently by means of the force F, the oscillation axis H is preferably made nearly orthogonal to typical plane S. In response to this, the oscillation axis H in the present embodiment is orthogonal to typical plane S, at point P₄. This can be seen from the fact that in Fig. 8, since the oscillation axis H completely overlaps point P₄ that is the intersection between the oscillation axis H and cross section VII-VII, the oscillation axis H is orthogonal to cross section VII-VII, at intersection P₄.

For even more efficient oscillation of the main roller 4 by means of the force F, the intersection between the oscillation axis H and typical plane S is preferably positioned on line I. In response to this, point P₄ in the present embodiment is positioned on line I.

Furthermore, for unified distribution of stresses in the contact zone N, typical point A is preferably selected to be positioned nearly centrally in the contact zone N. In response to this, point P₃ positioned centrally in the contact zone N is selected as typical point A in the present embodiment. Typical spiral E around P₃ is not shown in Fig. 3 since typical spiral E is hidden and concealed behind the roller cage 2, the roller support member 6, and the like. However, when a group of intersections between typical spiral E and a plane passing through the central axis of the screw shaft 1 in Fig. 3 and perpendicular to the sheet is derived, point P₃ is included, along with point P₁, in the intersections of the intersection group that are located to the front of the sheet, as shown in Fig. 5. It is therefore obvious that typical spiral E passes through point P₃, so that cross section VII-VII can be set as typical plane S.

If an expression different from the above is used, it can be restated that if typical spiral E has a lead angle θ, when a group of intersections between typical spiral E and a plane passing through the central axis of the screw shaft 1 in Fig. 3 and perpendicular to the sheet is derived, typical plane S is a plane passing through one of the intersections of the intersection group that are located to the front of the sheet, and that the plane is denoted by a line intersecting with the central axis of the screw shaft 1 at the lead angle θ. If rewording based on this expression is used, cross section VII-VII can be expressed as a plane passing through P₃ that is one of the intersections positioned to the front of the sheet, the plane being denoted by the line intersecting with the central axis of the screw shaft 1 at the lead angle θ. The lead angle γ of typical spiral E in Fig. 3 is an intersection angle between a tangent F of typical spiral E at point P₁ and a line G perpendicular to the central axis of the screw shaft 1. The angle at which the VII-VII cross section passing through point P₃ intersects the central axis of the screw shaft 1, and the angle at which typical spiral E1 intersects the plane perpendicular to the screw shaft 1 are the same (γ), so cross section VII-VII and typical spiral E are orthogonal to each other at point P₃.

As described above, the oscillating pin 7 works as the oscillation axis of each roller support member 6. At the same time, the oscillating pin 7 also functions to transmit a load between the roller cage 2 and the roller support member 6 by utilizing a shearing stress occurring at the oscillating axis.

In addition, as will be seen by referring to Fig. 5 and others, the roller cage 2 is formed to ensure a clearance between the main roller insertion hole 3 and the roller support member 6. The clearance avoids interference between the roller support member 6 and the roller cage 2 when the roller support member 6 oscillatingly moves in a predetermined oscillation-angle range as described above. The linear actuator is worked so that a difference between width across flats, W1 (see Fig. 3), of the main roller insertion hole 3 in the direction of the oscillation axis H, and width across flats, W2 (see Fig. 6), of the roller support member 6, is small in comparison with dimensional differences between other elements. The linear actuator is also constructed so that the roller support member 6 does not change its position significantly with respect to that of the roller cage 2 in the direction of the oscillation axis H.

The auxiliary roller insertion holes 2b that are nearly cylindrical holes formed in a radial direction of the roller cage 2 are each provided at a position about 180 degrees apart from the position of each main roller insertion hole 3 (each main roller 4), towards the circumference of the screw shaft 1. That is to say, the roller cage 2 in the present embodiment has three main roller insertion holes, 3a, 3b, 3c, and three auxiliary roller insertion holes, 2b. An auxiliary roller holder 15, an auxiliary roller 12, and auxiliary roller position-adjusting means 20, and more are inserted within each auxiliary roller insertion hole 2b.

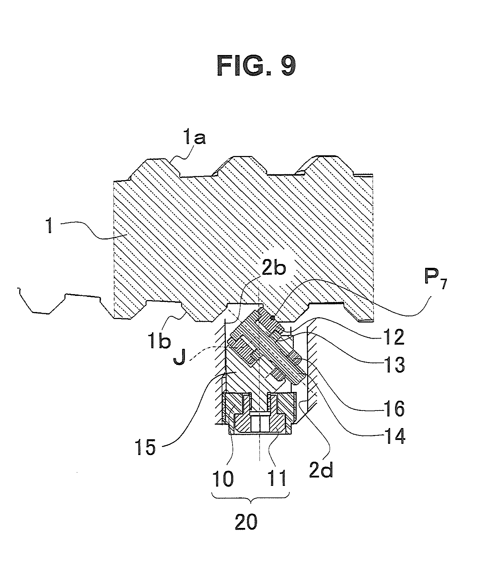

Fig. 9 is a cross-sectional view taken along line IX-IX in Fig. 4, the view showing a neighboring region of one auxiliary roller insertion hole 2b. The cross-section view of IX-IX is created by rotating a plane which is orthogonal to the sheet of Fig. 4 and passes through the central axis of the screw shaft 1, through an angle γ' about a contact point P₇ between the auxiliary roller 12 and the thread 30. The angle γ' is a lead angle of a spiral passing through point P₇ and positioned on a cylindrical surface sharing the same central axis with the screw shaft 1, the spiral passing through P₇ and having the same lead L as that of the screw shaft 1.

On the screw shaft side of the auxiliary roller holder 15 shown in Fig. 9, the auxiliary roller 12 is supported by an auxiliary roller shaft 14 so as to be rotatable about a rotational axis J. The rotational axis J of the auxiliary roller 12 is positioned on cross section IX-IX, and the auxiliary roller 12 rolls along the left flank surface 1b opposed to the right flank surface 1a along which the main roller 4 rolls. An outer circumferential profile of the auxiliary roller 12, in an axial cross section thereof, is formed with a curvature so that a central portion in the axial direction of the roller has a diameter greater than that of any other portion of the roller. The auxiliary roller 12 is in point contact with the left flank surface 1b, at point P₇. Additionally, the auxiliary roller 12 is mounted on the auxiliary roller shaft 14 so as to be rotatable via a needle bearing 13, and the auxiliary roller shaft 14 is fixed to the auxiliary roller holder 15 by a fixing nut 16.

One end of the auxiliary roller shaft 14 that is close to the fixing nut 16, and part of the fixing nut 16 protrude from the auxiliary roller holder 15. In order to prevent the thus-protruding auxiliary roller shaft 14 and fixing nut 16 from interfering with the roller cage 2, the auxiliary roller insertion hole 2b has a circularly shaped notch 2d. In addition, on a side of the auxiliary roller insertion hole 2b, a concave keyway 2c is formed in a direction other than that of cross section IX-IX, as shown in Fig. 4. A sliding key 9 is inserted in the keyway 2c, and the sliding key 9 constrains rotation of the auxiliary roller holder 15 in the auxiliary roller insertion hole 2b. That is to say, the rotational axis J of the auxiliary roller 12 is always retained on cross section IX-IX by the sliding key 9.

The auxiliary roller position-adjusting means 20 that adjusts a fixing position of the rotational axis J of the auxiliary roller 12 with respect to the screw shaft 1 is mounted at radial outside of the screw shaft 1, in the auxiliary roller holder 15. The auxiliary roller position-adjusting means 20 in the present embodiment is composed primarily of an adjusting nut 10 and a locking nut 11.

The adjusting nut 10 has a male-threaded portion on its outer circumference thereof, and is mounted at the radial outside of the screw shaft 1 adjacently to the auxiliary roller holder 15. The male-threaded portion of the adjusting nut 10 is threadably engaged with a female-threaded portion in the auxiliary roller insertion hole 2b. For example, if the adjusting nut 10 is rotated in a direction that the male-threaded portion is threaded down into the female-threaded portion, the auxiliary roller holder 15 is moved towards the screw shaft 1. Adjusting a position of the adjusting nut 10 in this way makes adjustable the fixing position of the rotational axis of the auxiliary roller 12 with respect to the screw shaft 1. A counterbore is provided in a central position of the adjusting nut 10 in the present embodiment, and the locking nut 11 is inserted in the counterbore.

The locking nut 11 is threadably engaged with the auxiliary roller holder 15 via a convex portion provided at the radial outside of the screw shaft 1, in the auxiliary roller holder 15. Rotating the locking nut 11 in a direction that the nut 11 is threaded onto the auxiliary roller holder 15 enables the adjusting nut 10 to be fixed between the locking nut 11 and the auxiliary roller holder 15. Such rotation of the locking nut 11 constrains the rotation of the adjusting nut 10, thus fixing a position of the auxiliary roller holder 15 with respect to the screw shaft 1, that is, the position of the rotational axis of the auxiliary roller 12.

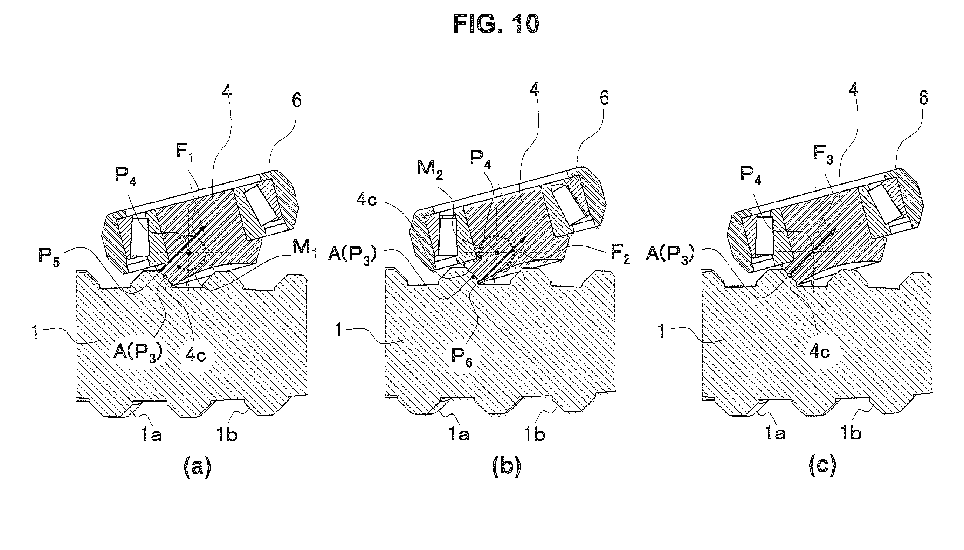

Next, advantageous effects of the above-constructed linear actuator according to the present invention are described below. Fig. 10 is a diagram that illustrates principles of operation of a self-aligning mechanism of the linear actuator according to the present embodiment.

1 The linear actuator according to the present embodiment includes: the main roller 4 having the rolling surface 4c which comes into contact with the flank surface 1a of the thread 30, the main roller 4 rolling along the flank surface 1a via the rolling surface 4 by rotating about the rotational axis D; the roller support member 6 that supports the main roller 4 so as to enable the roller to rotate about the rotational axis D; and the roller cage 2 that supports the roller support member 6 so as to make this support member able to oscillate with respect to the force transmitted from the flank surface 1a via the rolling surface 4c to the main roller 4, and rotates about the screw shaft 1 in relative form with respect thereto when the main roller 4 rolls.

Consider a case in which as shown in Fig. 10(a), the flank surface 1a and the rolling surface 4c are not parallel because of dimensional errors and one-side contact is occurring at point P₅ on an outer circumferential side of the screw shaft 1 with point P₃ (typical point A) as a reference. In the figure, contact force F₁ exerted from the flank surface 1a upon the rolling surface 4a is shown with an arrow drawn perpendicularly to a cross-sectional profile of the flank surface 1a from point P₅ at an edge of the main roller 4. Strictly, point P₅ and the arrow denoting a direction of the contact force F₁ are slightly deviated in an outward direction of the sheet of Fig. 10(a), for the reason mentioned above. Fig. 10(a), therefore, shows the section of interest as projected on cross section VII-VII.

When the contact force F₁ acts at point P₅ as shown in the figure, the contact force F₁ passes through a position deviated upward from the oscillation axis H (intersection P₄ of the oscillation axis H and cross section VII-VII), hence generating a moment M1 around the oscillation axis H. The generation of the moment M1 rotates the entire roller support member 6 clockwise in Fig. 10(a). As a result, an opposite section of the rolling surface 4a with respect to point P₅ at which the force F₁ has acted (i.e., an inner circumferential side of the screw shaft 1 with point P₃ as a reference) is brought closer to the flank surface 1a. Finally, the entire roller support member 6 comes to an automatic stop with the rolling surface 4c and the flank surface 1a in linear contact with each other, thus alleviating the one-side contact state.

Even in absence of such an extreme one-side contact state as shown in Fig. 10(a), if a resultant force of the contact force components between the flank surface 1a and the rolling surface 4a is external to point P₃, another moment occurs in the same direction as that of the moment M1, so the entire roller support member 6 rotates automatically in a direction that the resultant force of the contact force components moves towards the inner circumferential side of the screw shaft.

Fig. 10(b) shows a state in which one-side contact is occurring at the inner circumferential side of the screw shaft 1, conversely to the state in Fig. 10(a). In Fig. 10(b), contact force F₂ exerted from the flank surface 1a upon the rolling surface 4a is shown with an arrow drawn perpendicularly to the cross-sectional profile of the flank surface 1a from point P₆ at the edge of the main roller 4. Strictly, point P₆ and the arrow denoting a direction of the contact force F₂ are slightly deviated in an outward direction of the sheet of Fig. 10(b), for the reason mentioned above. Fig. 10(b), therefore, shows the section of interest as projected on cross section VII-VII.

When the contact force F₂ acts upon point P₆ as shown in the figure, the contact force F₂ passes through a position deviated downward from point P₄, hence generating a moment M2 around the oscillation axis H. The generation of the moment M2 rotates the entire roller support member 6 counterclockwise in Fig. 10(b). As a result, an opposite section of the rolling surface 4a with respect to point P₆ at which the force F₁ has acted (i.e., the outer circumferential side of the screw shaft 1 with point P₃ as a reference) is brought closer to the flank surface 1a. Finally, as in the example of Fig. 10(a), the entire roller support member 6 comes to an automatic stop with the rolling surface 4c and the flank surface 1a in linear contact with each other, thus alleviating the one-side contact state.

Fig. 10(c) shows a state in which a position at which the resultant force of the contact force components between the flank surface 1a and the rolling surface 4a acts is present at central point P₃ on the flank surface 1a. In the figure, the resultant force F₃ of the contact force components exerted from the flank surface 1a upon the rolling surface 4a is shown with an arrow drawn perpendicularly to the cross-sectional profile of the flank surface 1a from point P₃.

When the contact force F₃ acts upon point P₃ as shown in the figure, the contact force F₃ passes through point P₄, hence not generating a moment around the oscillation axis H. That is to say, when the resultant force of the contact force components between the flank surface 1a and the rolling surface 4a passes through the oscillation axis H, the roller support member 6 maintains a stable posture, so the acting position (P₃) of the resultant force F₃ of the contact force components between the flank surface 1a and the rolling surface 4a remains unchanged. At this time, the contact force between the flank surface 1a and the rolling surface 4a actually acts as a linearly distributed load, but the fact that the position of the resultant force can be maintained at point P₃ that is the central position of the flank surface 1a means that the load can be equally distributed at nearly a fixed rate in terms of linear load distribution. Briefly, since the position of the resultant force can thus be maintained, a maximum value in the load distribution can be held down to a small value.

According to the present embodiment, as described above per Figs. 10(a) to 10(c), even if one-side contact occurs for a reason such as a backlash due to dimensional errors between parts, since the roller support member 6 oscillates automatically with respect to the roller cage 2, the main roller 4 and the screw shaft 1 can be reliably brought into linear contact. According to the present embodiment, therefore, durability against flaking can be improved exactly as initially designed.

Additionally, the present embodiment simultaneously achieves high motive-power transmission efficiency and high durability against large thrust, in electrically driven linear actuators. What's more, both are achieved under a configuration of very high robustness with minimum impacts of dimensional errors between constituent parts. This allows easier use of electrically driven linear actuators in hydraulic cylinders and other conventional actuator-related applications that require large thrust. The high motive-power transmission efficiency of these electrically driven linear actuators, therefore, leads to highly efficient operation of the apparatuses for which the actuators are used.

Furthermore, the linear actuator in the present embodiment includes three main rollers 4 that each roll along one of the two flank surfaces constituting the thread 30 (in the present embodiment, the flank surface 1a). The three main rollers 4 constructed to roll along one flank surface, can all be reliably brought into contact with the flank surface, even if slight dimensional errors exist between parts. Better still, even if one-side contact occurs, the three main rollers, 4, can all be reliably brought into linear contact with the flank surface since each roller support member 6 oscillates as described above. IN short, according to the present embodiment, high robustness can be achieved while avoiding adverse effects of dimensional errors between parts.

By the way, the linear actuator according to the present embodiment includes the auxiliary rollers 12 that roll along the left flank surface 1b, and the auxiliary roller position-adjusting means 20 that adjusts the fixing position of the rotational axis J of the auxiliary roller 12 with respect to the screw shaft 1. The fixing position of the rotational axis J of the auxiliary roller 12 can be adjusted by rotating the adjusting nut 10.

Using the auxiliary roller position-adjusting means 20 enables the roller cage 2 to be mounted on the screw shaft 1 via all main rollers 4 and auxiliary rollers 12 in absence of axial and radial backlash of the screw shaft 1. More specifically, this can be performed by confirming that as described above, the main rollers 4 are in linear contact with the right flank surface 1a via the oscillating pins 7, and then while retaining this state, rotating the adjusting nut 10 to move the auxiliary rollers 12 in the direction of the screw shaft 1 until the rollers 12 have come into contact with the left flank surface 1b. During this procedure, the roller cage 2 is preferably fixed so that the end faces 2e, 2f thereof are perpendicular to the central axis of the screw shaft 1.

In addition, the auxiliary rollers 12 can be constantly preloaded by further rotating the adjusting nut 10 through a predetermined angle with the rollers 12 in contact with the left flank surface 1b. Conversely, any backlash between the screw shaft 1 and the roller cage 2 can be controlled to a certain level by rotating the adjusting nut 10 in a direction opposite to the above (i.e., loosening the nut) with the rollers 12 in contact with the left flank surface 1b. That is to say, if the auxiliary roller position-adjusting means 20 is provided as described above, variations in preload and backlash due to accumulation of dimensional errors between constituent parts can be suppressed by rotating the adjusting nut 10 in the opposite direction. In the description of the present embodiment, an element that adjusts the fixing position of the rotational axis J in the radial direction of the screw shaft 1 has been taken as an example of the auxiliary roller position-adjusting means 20. The means 20 may however be an element that adjusts the fixing position of the rotational axis J in the axial direction of the screw shaft 1.

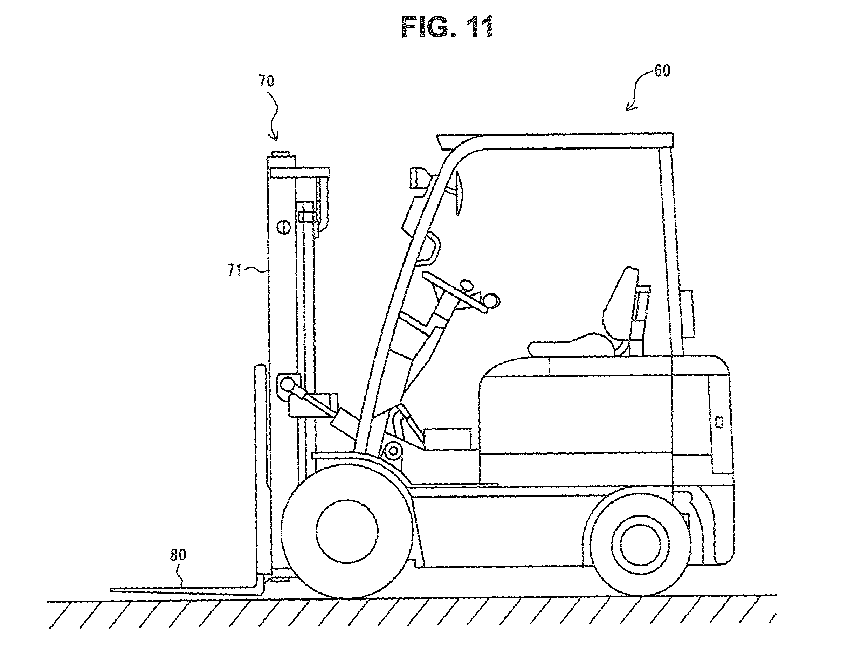

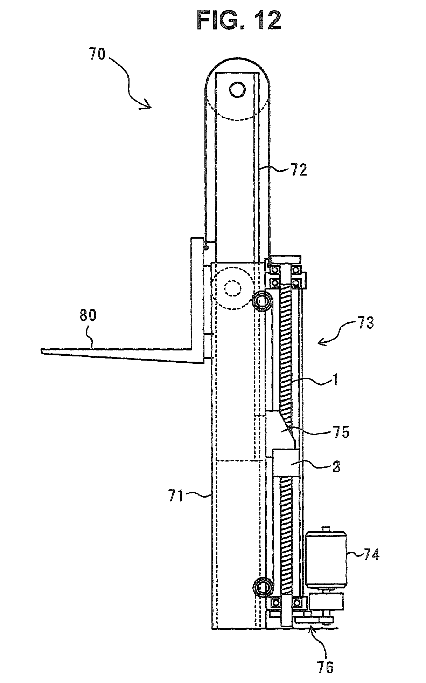

Next, a second embodiment of the present invention is described below. Fig. 11 is a side view of a forklift truck equipped with the linear actuator according to the first embodiment, and Fig. 12 is an enlarged view that shows a mast 70 and vicinity of the forklift truck shown in Fig. 11.

Referring to Fig. 11, the forklift truck shown in Figs. 11 and 12 includes a truck body 60 equipped with a track device and a steering device, the mast 70 provided in front of the truck body 60, and forks 80 installed on an inner frame 72 (see Fig. 12) of the mast 70.

The mast 70 in Fig. 12 includes an outer frame 71 installed in front of the truck body 60, the inner frame 72 provided internal of the outer frame 71 and constructed to move upward and downward along the outer frame 71, and the linear actuator 73 that moves the inner frame 72 upward and downward. The linear actuator 73 includes a screw shaft 1 fixed to the outer frame 71, a roller cage 2, and a motor (driving source) 74 that rotationally drives the screw shaft 1. The roller cage 2 supports the inner frame 72 from below via a bracket 75 mounted on the inner frame 72. The motor 74 in the present embodiment transmits driving force to the screw shaft 1 via a plurality of gears 76.

In the forklift truck of the above-described configuration, when the motor 74 is driven using the steering device, the screw shaft 1 is rotationally driven to move the roller cage 2 along the screw shaft 1. Thus, the inner frame 72 supported by the roller cage 2 is lifted upward or downward, thus moving the forks 80 upward or downward. The linear actuator in each embodiment described above can be used in this way as a height control device for the forks 80 of the forklift truck. That is to say, according to the present embodiment, an electrically driven actuator can be used as an actuator for the forklift trucks in which a hydraulic actuator has been mainly used before.

### Description of Reference Numbers and Symbols

1 ... Screw shaft 1, 1a ... Right flank surface 1a, 1b ... Left flank surface, 2 ... Roller cage, 2a ··· Oscillating pin insertion hole, 2b ··· Auxiliary roller insertion hole, 2c ... Keyway, 2d ... Circular notch, 2e ... End face, 2f ... End face, 3 ... Main roller insertion hole, 4 ... Main roller, 4a ... Rotating shaft, 4c ... Rolling surface, 4d ... Inner end face, 4e ... Rolling portion, 5 ... Rolling bearing (Tapered roller bearing), 6 ... Roller support member, 6a ... Oscillating pin insertion hole, 7 ... Oscillating pin, 9 ... Sliding key, 10 ... Adjusting nut, 11 ... Locking nut, 12 ... Auxiliary roller, 13 ... Needle, 14 ... Auxiliary roller shaft, 15 ... Auxiliary roller holder, 16 ... Fixing nut, 20 ... Auxiliary roller position-adjusting means, 30 ... Screw thread, 73 ... Linear actuator, 80 ... Fork D ... Rotational axis of main roller, E ... Typical spiral, H ... Oscillation axis, I ... Line passing through typical point P on typical plane S, the line being orthogonal to contact zone N, J ... Rotational axis of auxiliary roller, N ... Linear contact zone, S ... Typical plane

## Claims

1. A linear actuator comprising:
a screw shaft;
a screw thread formed spirally on an outer circumference of the screw shaft;
a main roller with rolling surface of which comes into contact with a flank surface of the screw thread, the main roller rolling along the flank surface via the rolling surface by rotating about a rotational axis of the main roller;
a roller support member supporting the main roller so as to enable rotation of the roller about the rotational axis; and
a roller cage supporting the roller support member so as to enable oscillation of the support member with respect to a force transmitted from the flank surface via the rolling surface to the main roller, the roller cage being constructed to rotate about the screw shaft in relative form with respect thereto when the main roller roll.

2. The linear actuator according to claim 1, wherein:
the main roller is enabled to come into contact with the flank surface in a linear contact zone on the rolling surface;
when one given point in the linear contact zone is defined as a typical point,
when a spiral passing through the typical point and
positioned on a cylindrical surface which shares a central axis with the screw shaft, the spiral passing through the typical point and having the same lead as that of the screw shaft, is defined as a typical spiral, and
when a plane substantially orthogonal to the typical spiral at the typical point is defined as a typical plane,
the roller support member has an oscillation axis intersecting the typical plane; and
the oscillation axis and the typical plane intersect with each other at a point present on or near a line which passes through the typical point on the typical plane.

3. The linear actuator according to claim 2, wherein:
the oscillation axis of the roller support member is substantially orthogonal to the typical plane.

4. The linear actuator according to claim 2, wherein:
the typical point is positioned nearly centrally in the linear contact zone.

5. The linear actuator according to claim 1, wherein:
the rotational axis of the main roller is supported by the roller support member in a posture that a line imaginarily extending the rotational axis intersects the screw shaft,
and at the same time, in a posture that the rotational axis is inclined to the flank surface with which the rolling surface comes into contact;
the flank surface of the screw thread is inclined with respect to a central axis of the screw shaft so that the screw thread has a bottom larger than a top thereof; and
sections of the main roller gradually decrease in diameter as the sections are closer to the screw shaft, in a definite range in a direction of the rotational axis of the main roller, the main roller being additionally in linear contact with the flank surface.

6. The linear actuator according to claim 5, wherein:
sections of the main roller gradually decrease in diameter at a definite rate as the sections are closer to the screw shaft, in the definite range in the direction of the rotational axis of the main roller, to fit a particular shape of the thread including the inclined flank surface; and
the rolling surface of the main roller is formed from a part of a conical lateral face.

7. The linear actuator according to claim 1, wherein:
the roller cage supports a plurality of roller support members; and
each main roller in the roller support members is spaced in a circumferential direction of the screw shaft along the thread.

8. The linear actuator according to claim 7, wherein:
three of the main rollers supported by the roller support members roll along one of two flank surfaces which form the screw thread.

9. The linear actuator according to claim 1, further comprising:
auxiliary rollers each supported by the roller cage so as to be rotatable about a rotational axis, the auxiliary rollers rolling along another flank surface opposed to the flank surface along which the main roller rolls; and
a plurality of auxiliary roller position-adjusting means that each adjust a fixing position of the rotational axis of one auxiliary roller with respect to the screw shaft.

10. The linear actuator according to claim 9, wherein:
the auxiliary rollers and the plurality of auxiliary roller position-adjusting means are used at locations as many as there actually are the main rollers.

11. A forklift truck equipped with the linear actuator according to any one of claims 1 to 10, wherein the linear actuator serves as means for adjusting height of forks.

12. The linear actuator according to claim 3, wherein:
the typical point is positioned nearly centrally in the linear contact zone.

13. The linear actuator according to claim 1, wherein:
the main roller is adapted for coming into contact with the flank surface in a linear contact zone on the rolling surface; and
the roller support member has its oscillation axis placed at a position that,
when a force transmitted from the flank surface via the rolling surface to the main roller acts in deviated form upon one end side of the linear contact zone on the rolling surface,
causes the main roller to be oscillated in a direction in which the other end side of the linear contact zone moves to be closer to the flank surface.
